# EUROPÄISCHE PATENTSCHRIFT

(11) **EP 0 954 947 B1**
(45) Veröffentlichungstag und Bekanntmachung des Hinweises auf die Patenterteilung: **10.04.2002**
(21) Anmeldenummer: 98905235.2
(22) Anmeldetag: 09.01.1998
(51) Int. Cl.: H04Q 11/04

(54) **VERFAHREN ZUR REALISIERUNG VON EMULIERTEN RINGNETZ-STRUKTUREN IN EINEM NACH DEM ASYNCHRONEN TRANSFER-MODUS ATM KONZIPIERTEN KOMMUNIKATIONSNETZ**
METHOD FOR REALIZING EMULATED RINGED NETWORK STRUCTURES IN A TELECOMMUNICATIONS NETWORK DESIGNED ACCORDING TO THE ASYNCHRONOUS TRANSFER MODE (ATM)
PROCEDE POUR LA REALISATION DE STRUCTURES EMULEES DE RESEAU BOUCLE DANS UN RESEAU DE TELECOMMUNICATIONS CON U SELON LE MODE DE TRANSFERT ASYNCHRONE (MTA)

(30) Priorität: 22.01.1997 DE 19702107
(43) Veröffentlichungstag der Anmeldung: 10.11.1999
(73) Patentinhaber: SIEMENS AKTIENGESELLSCHAFT, 80333 München (DE)
(72) Erfinder: HÜNLICH, Klaus, D-85467 Neuching (DE)
(86) Internationale Anmeldenummer: DE9800070
(87) Internationale Veröffentlichungsnummer: WO9833353

(56) Entgegenhaltungen:
- EP-A- 0 468 813
- GB-A- 2 302 234
- MARTINSON T ET AL: "OPTISCHE GIGABIT-ATM-NETZTECHNOLOGIE INTENSIVIERT DEN SPRACHUNTERRICHT AN DER UNIVERSITAET" TEC. DAS TECHNISCHE MAGAZIN VON ASCOM, Nr. 2, 1.Januar 1995, Seiten 26-31, XP000557521
- TAYLOR M: "LAN Emulation over ATM" COMPUTER COMMUNICATIONS, Bd. 20, Nr. 1, Januar 1997, Seite 48-59 XP004056911

## Beschreibung

In einem nach dem asynchronen Transfer-Modus konzipierten ATM-Kommunikationsnetz sind an zumindest teilweise vermaschte ATM-Vermittlungseinheiten ATM-Kommunikationsendgeräte angeschlossen. Die physikalischen Verbindungen zwischen ATM-Vermittlungseinheiten und zwischen diesen und den ATM-Kommunikationsendgeräten sind in virtuelle Pfade und virtuelle Kanäle unterteilt. Bei einem Verbindungsaufbau werden vor Beginn der Nutzdatenübertragung durch Austausch von Signalisierungsinformationen in den jeweiligen ATM-Vermittlungseinheiten Verbindungstabellen mit aus virtuellen Kanal-Identifizierern - im weiteren mit VCI bezeichnet - und aus virtuellen Pfad-Identifizierern - im weiteren mit VPI bezeichnet - bestehenden Routing-Informationen erstellt. Durch die in die Verbindungstabellen eingefügten VCI und VPI ist angegeben, wie die virtuellen Pfade bzw. die in den virtuellen Pfaden enthaltenen virtuellen Übertragungskanäle der ein- und ausgehenden virtuellen Verbindungen der ATM-Vermittlungseinheit durch die Signalisierung einander zugeordnet sind. In über diese Verbindungen vermittelte, Nutzdaten transportierende ATM-Zellen ist in einem Kopffeld eine aus einem VPI und einem VCI bestehende Routing-Information eingefügt. In einer ATM-Vermittlungseinheit werden die Kopffelder der eingehenden ATM-Zellen bearbeitet, d.h. die darin enthaltene Routing-Informationen analysiert. Anschließend werden die ATM-Zellen durch das in der ATM-Vermittlungseinheit angeordnete, aus einem oder mehreren Koppelelementen bestehende Koppelnetz zu einem durch die analysierte Routing-Information bestimmten Ziel vermittelt.

Kommunikationsnetze können auch als lokales Netzwerk - LAN - ausgestaltet sein. Ein besonders vorteilhaftes Kommunikationsnetz für verbindungslose Kommunikationsdienste stellt das Ringnetz dar. Ringnetze sind üblicherweise gemäß dem IEEE Standard 802.5 realisiert. Gemäß diesem Standard wird im Ringnetz Information seriell von Station zu Station bzw. von Kommunikationsendgerät zu Kommunikationsendgerät übermittelt. Hierbei überträgt eine Station die zu sendenden Informationen auf den Ring, in welchem die Informationen von einer Station zur nächsten zirkulieren. Die relevanten Informationen werden von der durch die Zieladresse identifizierten Zielstation kopiert und gleichzeitig an die nächste Station weitergegeben. Empfängt eine Sendestation die von ihr ursprünglich ausgesendeten Daten, werden diese vom Übertragungsmedium entfernt. Für die Vermittlung von Informationen sind Ringnetz-Adressen vorgesehen. Gemäß dem IEEE Standard 802.5 wird bei einer gezielten Übertragung zu einer Station in einem Ziel-Adressfeld eine Ringnetz-Einzeladresse und bei einer gezielten Übertragung zu einer vorgebbaren Gruppe von Stationen eine Ringnetz-Gruppenadresse eingefügt. Desweiteren zirkuliert im Ringnetz ein Token - spezielle Bitfolge - mit dessen Hilfe der Zugriff auf die Ringnetz-Ressourcen gesteuert wird. Der Token wird im Anschluß an einen erfolgreich abgeschlossenen Informationstransfer ausgesendet und zirkuliert über das Übertragungsmedium, d.h. wird von einer Station an die nachfolgende übergeben. Stationen können Zugriff auf das Übertragungsmedium erhalten, indem sie den zirkulierenden Token entfernen. Nach Beendigung des Datentransfers generiert die Sendestation einen neuen Token, so daß andere Stationen Zugriff auf das Übertragungsmedium erhalten können.

Desweiteren werden derzeit ATM-Kommunikationsnetze konzipiert, in denen lokale Netzwerke - LAN's - integriert werden. So ist beispielsweise in der Druckschrift GB 2 302 234 A ein nach dem Asynchronen Transfer Modus konzipiertes ATM-Kommunikationsnetz beschrieben, bei welchem mehrere ATM-Kommunikationsendgeräte einer ATM-Ringnetz-Struktur zuordenbar sind.

In der Druckschrift "ATM Internetworking, White Paper, May 1995, Anthony Alles, Seite 25-33" sind zwei Methoden zur Steuerung eines Ringnetz-Zugriffs sowie der Ringnetz-Kommunikation gemäß einem Ringnetz-Protokoll innerhalb eines ATM-Kommunikationsnetzes beschrieben. Nach einer ersten Methode - auch als "native mode operation" bezeichnet - werden die Ringnetz-Adressen bzw. Ringnetz-Gruppenadressen durch einen "Adress-Auflösungs-Mechanismus" direkt in ATM-Zieladressen umgewandelt und die Informationen über das ATM-Kommunikationsnetz übermittelt. Als weitere Methode zur Realisierung von Ringnetz-Protokollen in einem ATM-Kommunikationsnetz wird die "LAN-Emulation" genannt. Die Aufgabe eines LAN-Emulations-Protokolles ist es, ein lokales Netzwerk, aufgesetzt auf einem ATM-Kommunikationsnetz zu emulieren. Die Emulierung einer Ethernet- oder Token-Ring-Netzstruktur findet in zentral angeordneten speziellen Einheiten wie beispielsweise "LAN Emulation Client, LAN Emulation Server, Broadcast and Unknown Server oder LAN Emulation Configuration Server" statt. Kommunikations-Anforderungen von dem lokalen Netzwerk - LAN - zugeordneten Kommunikationsendgeräten werden über das ATM-Kommunikationsnetz an diese zentralen Einrichtungen vermittelt, von denen die LANgerechte Behandlung der Kommunikationsverbindungen durchgeführt wird.

Der Erfindung liegt die Aufgabe zugrunde, eine emulierte Ringnetz-Struktur in einem nach dem Asynchronen-Transfer-Modus konzipierten ATM-Kommunikationsnetz mit geringstem, zusätzlichen Aufwand zu realisieren. Die Aufgabe wird durch ein Verfahren gemäß den Merkmalen des Oberbegriffs des Patentanspruchs 1 durch dessen kennzeichnende Merkmale gelöst.

Beim erfindungsgemäßen Verfahren zur Realisierung von emulierten Ringnetz-Strukturen in einem nach dem Asynchronen Transfer Modus konzipierten Kommunikationsnetz sind mehrere ATM-Kommunikationsendgeräte mit einer nach dem ATM konzipierten ATM-Vermittlungseinheit verbunden. Von den ATM-Kommunikationsendgeräten an die ATM-Vermittlungseinheit übermittelte, einen Zellkopf aufweisende ATM-Zellen werden mit Hilfe von im Zellkopf enthaltenen, jeweils aus einem virtuellen Pfad-Identifizierer VPI und aus einem virtuellen Kanal-Identifizierer VCI bestehenden Routinginformationen an ein ATM-Ziel-Kommunikationsendgerät vermittelt. Die ATM-Kommunikationsendgeräte sind einer Ringnetz-Struktur zuordenbar, wobei diesen ATM-Kommunikationsendgeräten jeweils eine Ringnetz-Adresse zugeordnet ist und der Ringnetz-Zugriff sowie die Ringnetz-Kommunikation ringnetz-spezifisch gesteuert wird. Der wesentliche Aspekt des erfindungsgemäßen Verfahrens besteht darin, daß zwischen den zugeordneten ATM-Kommunikationsendgeräten und der ATM-Vermittlungseinheit in jede Übermittlungsrichtung jeweils ein virtueller Pfad als virtueller Ringnetz-Pfad eingerichtet ist. Bei einer Ringnetz-Struktur-Kommunikation wird dem den jeweiligen virtuellen Ringnetz-Pfad repräsentierenden virtuellen Ringnetz-Pfad-Identifizierer ein eine Ringnetz-Adresse repräsentierender, virtueller Ringnetz-Kanal-Identifizierer zugeordnet. Die über die virtuelle Ringnetz-Struktur übermittelten ATM-Zellen werden jeweils an die durch die Ringnetz-Adresse adressierten ATM-Kommunikationsendgeräte vermittelt.

Ein wesentlicher Vorteil des erfindungsgemäßen Verfahrens besteht darin, daß auf besonders einfache Weise durch Einrichten eines virtuellen Ringnetz-Pfades in einem nach den Asynchronen-Transfer-Modus ATM konzipierten Kommunikationsnetz und durch Abbildung einer ein oder mehrere ATM-Kommunikationsendgeräte identifizierenden Ringnetz-Adresse in die virtuelle Kanal-Identifizierung von ATM-Zellen eine emulierte Ringnetz-Struktur - LAN-Emulation - realisiert wird.

Bei einer über mehrere, zumindest teilweise vermaschte ATM-Vermittlungseinheiten geführten Ringnetz-Struktur zwischen den betroffenen ATM-Vermittlungseinheiten wird jeweils ein gemäß der Übermittlungsrichtung der Ringstruktur gerichteter virtueller Pfad als virtueller Ringnetz-Pfad eingerichtet, wobei virtuelle Ringnetz-Pfade durch virtuelle Ringnetz-Pfad-Identifizierer repräsentiert sind. Bei einer Ringnetz-Struktur-Kommunikation zwischen den ATM-Vermittlungseinheiten werden die ATM-Zellen mit Hilfe von virtuellen Ringnetz-Pfad-Identifizierern an die jeweiligen eingerichteten Ringnetz-Pfade vermittelt und über diese übertragen - Anspruch 2. Somit wird auf vorteilhafte Weise ohne zusätzliche zentrale Einrichtungen - z.B. LAN-Server, LAN-Router - eine emulierte Ringnetz-Struktur bzw. LAN-Emulation in einem mehrere ATM-Vermittlungseinheiten und mehrere ATM-Kommunikationsendgeräte aufweisenden ATM-Kommunikationsnetz realisiert.

Die Ringnetz-Adresse repräsentiert entweder eine Ringnetz-Einzeladresse oder eine Ringnetz-Gruppenadresse- Anspruch 5.

Dabei repräsentiert nach einer weiteren vorteilhaften Ausgestaltung eine erste vorgegebene Ringnetz-Gruppenadresse eine Rundsendeadresse und eine zweite vorgegebene Ringnetz-Gruppenadresse einen Ringnetz-Token, wobei der Ringnetz-Token den Zugriff auf die Ringnetz-Struktur steuert - Anspruch 6.

Vorteilhaft wird die Ringnetz-Adresse hinsichtlich ihres Adressenumfangs und der Kennung der Ringnetz-Einzeladresse und Ringnetz-Gruppenadresse gemäß der IEEE Spezifikation 802.5 gebildet. Dabei ist der Ringnetz-Token durch eine vorgebbare Ringnetz-Gruppenadresse repräsentiert - Anspruch 7. Durch die standardisierte Adressierung können bereits realisierte Netzwerkanwendungen bzw. Netzwerktreiber ohne großen Anpassungsaufwand auf die emulierte Ringnetz-Struktur übertragen werden.

Gemäß einer weiteren vorteilhaften Ausgestaltung werden die an eine ATM-Vermittlungseinheit übermittelten, eine Ringnetz-Gruppenadresse aufweisenden ATM-Zellen mittels einer Ringtabelle an die mit der ATM-Vermittlungseinheit verbundenen und der Ringnetz-Struktur zugeordneten ATM-Kommunikationsendgeräte vermittelt - Anspruch 8. Durch das Einrichten einer Ringtabelle in jeder der emulierten Ringnetz-Struktur zugeordneten ATM-Vermittlungseinheit wird mit geringstem zusätzlichen Aufwand die emulierte Ringnetz-Struktur bzw. der virtuelle Ringnetz-Pfad realisiert.

Vorteilhaft wird bei einer aktuell angegebenen Ringnetz-Einzeladresse diese in eine ATM-Kommunikationsnetzadresse konvertiert und gemäß der konvertierten ATM-Kommunikationsnetzadresse direkt an das betroffene ATM-Kommunikationsendgerät vermittelt. Anspruch 9. Eine Ringnetz-Einzeladresse aufweisende ATM-Zellen werden nicht an alle der emulierten Ringnetz-Struktur zugeordneten ATM-Kommunikationsendgeräte sondern direkt an das durch die Ringnetz-Einzeladresse repräsentierte ATM-Kommunikationsendgerät vermittelt. Bei der Datenübertragung mit einer Ringnetz-Einzeladresse wird eine höhere Sicherheit bei der Datenübertragung erreicht, da die zu übermittelnden Informationen bzw. ATM-Zellen direkt, d.h. verbindungsorientiert und nicht verbindungslos, d.h. über jedes, mit der emulierten Ringnetz-Struktur verbundene ATM-Kommunikationsendgerät vermittelt werden.

Im folgenden wird das erfindungsgemäße Verfahren zur Realisierung von emulierten Ringnetz-Strukturen in einem nach dem Asynchronen-Transfer-Modus - ATM - konzipierten Kommunikationsnetz anhand eines Blockschaltbildes und anhand eines Vermittlungs-Ablaufdiagrammes näher erläutert. Dabei zeigen
- FIG 1: ein Blockschaltbild mit mehreren zumindest teilweise vermaschten ATM-Vermittlungseinheiten, welche mit mehreren, einer Ringnetz-Struktur zugeordneten ATM-Kommunikationsendgeräten verbunden sind und
- FIG 2: ein den jeweils in den ATM-Vermittlungseinheiten realisierten, erfindungsgemäßen ATM-Vermittlungsprozeß darstellendes Vermittlungsablauf-Diagramm.

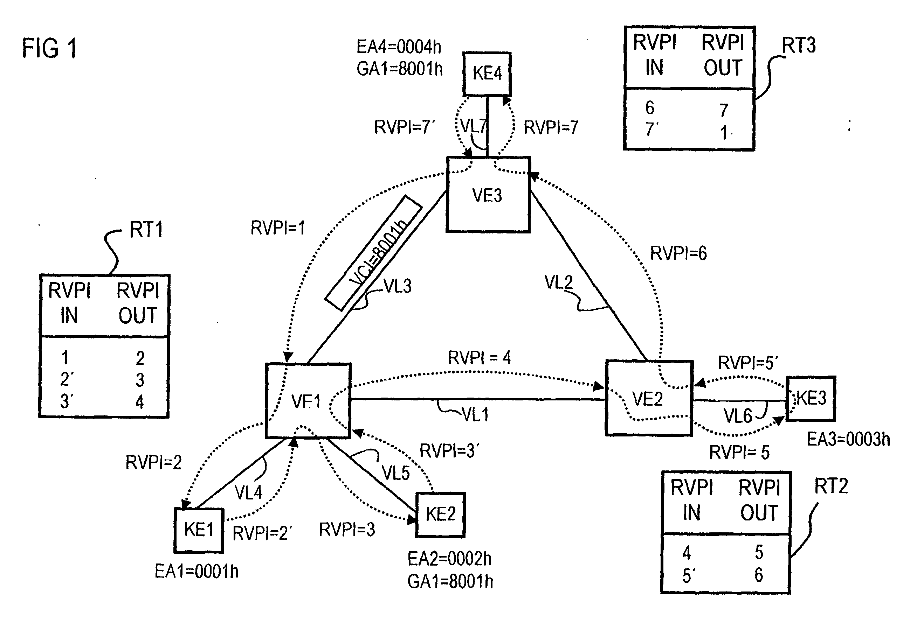

FIG 1 zeigt drei in einem nach dem asynchronen Transfer-Modus ATM konzipierten Kommunikationsnetz - nicht dargestellt - angeordnete, über drei ATM-Verbindungsleitungen VL1...3 vermaschte ATM-Vermittlungseinheiten VE1...3. Die erste ATM-Vermittlungseinheit VE1 ist über eine erste ATM-Verbindungsleitung VL1 mit der zweiten ATM-Vermittlungseinheit VE2 verbunden, welche wiederum über eine zweite ATM-Verbindungsleitung VL2 an die dritte ATM-Vermittlungseinheit VE3 angeschlossen ist. Die dritte ATM-Vermittlungseinheit VE3 ist über die dritte ATM-Verbindungsleitung VL3 mit der ersten ATM-Vermittlungseinheit VE1 verbunden. Desweiteren sind jeweils über eine weitere ATM-Verbindungsleitung VL4...7 ein erstes und ein zweites ATM-Kommunikationsendgerät KE1,2 an die erste ATM-Vermittlungseinheit VE1, ein drittes ATM-Kommunikationsendgerät KE3 an die zweite ATM-Vermittlungseinheit VE2 sowie ein viertes ATM-Kommunikationsendgerät KE4 an die dritte ATM-Vermittlungseinheit VE3 angeschlossen. Die angegebenen ATM-Kommunikationsendgeräte KE1...4 sind einer unidirektionalen Ringnetz-Struktur zugeordnet - durch punktierte Linien angedeutet. Die ATM-Kommunikationsendgeräte KE1...4 weisen jeweils eine ringnetzstruktur-spezifische Ringnetz-Einzeladresse EA1...4 auf, welche gemäß der im IEEE Standard 802.5 beschriebenen 16-Bit Ziel-Adressierung formatiert sind. Beim Ausführungsbeispiel ist dem ersten ATM-Kommunikationsendgerät KE1 die hexadezimale Ringnetz-Einzeladresse EA1=0001h, dem zweiten ATM-Kommunikationsendgerät KE2 die hexadezimale Ringnetz-Einzeladresse EA2=0002h, dem dritten ATM-Kommunikationsendgerät KE3 die hexadezimale Ringnetz-Einzeladresse EA3=0003h und dem vierten ATM-Kommunikationsendgerät KE4 die hexadezimale Ringnetz-Einzeladresse EA4=0004h zugeordnet. Desweiteren bilden das zweite ATM-Kommunikaitonsendgerät KE2 und das vierte ATM-Kommunikationsendgerät KE4 eine mittels einer Ringnetz-Gruppenadresse GA1 identifizierbare ATM-Kommunikationsendgeräte-Gruppe. Gemäß dem genannten IEEE Standard 802.5 ist das höchstwertigste Bit - Most Significant Bit MSB - bei einer die Ringnetz-Gruppenadresse GA1 repräsentierenden Bitfolge gesetzt; in FIG 1 stellt die den hexadezimalen Wert 8001h repräsentiernde Bitfolge die Ringnetz-Gruppenadresse GA1 dar, welche zusätzlich neben der Ringnetz-Einzeladresse EA2,4 dem zweiten und vierten ATM-Kommunikationsendgerät KE2,4 zugeordnet ist. Der Zugriff der genannten ATM-Kommunikationsendgeräte KE1...4 auf das Übertragungsmedium - z.B. Lichtwellenleiter oder Koaxial-Kabel - wird gemäß dem im IEEE Standard 802.5 beschriebenen Token Ring Zugriffsprotokoll gesteuert. Die Vermittlung von an die ATM-Vermittlungseinheiten VE1...4 übermittelten ATM-Zellen erfolgt anhand in den ATM-Vermittlungseinheiten VE1...4 angeordneter, Informationen über virtuelle Verbindungen aufweisender Verbindungstabellen - nicht dargestellt.

Um die erfindungsgemäße Emulation einer Ringnetz-Struktur zwischen den vier ATM-Kommunikationsendgeräten KE1...4 und den drei ATM-Vermittlungseinheiten VE1..3 basierend auf der ATM-Vermittlungstechnik zu realisieren, ist in jeder ATM-Vermittlungseinheit VE1...3 eine zusätzliche Ringtabelle RT1...3 vorgesehen. In den drei Ringtabellen RT1...3 sind jeweils Informationen - virtuelle Ringnetz-Pfad-Identifizierer - von an einer ATM-Vermittlungseinheit VE1...3 ein- und ausgehenden virtuellen Pfaden eingetragen, wobei die in den Ringtabellen RT1...3 angegebenen, virtuellen Pfade bzw. deren Identifizierungs-Werte RVPI einen die genannten ATM-Kommunikationsendgeräte KE1...4 verbindenden, unidirektionalen, virtuellen Ringnetz-Pfad bilden - durch punktierte Linien angedeutet. Erfindungsgemäß repräsentieren die Werte der virtuellen Kanal-Identifizierung RVCI der innerhalb des virtuellen Ringnetz-Pfades übermittelten ATM-Zellen eine Ringnetz-Einzeladresse EA bzw. Ringnetz-Gruppenadresse GA.

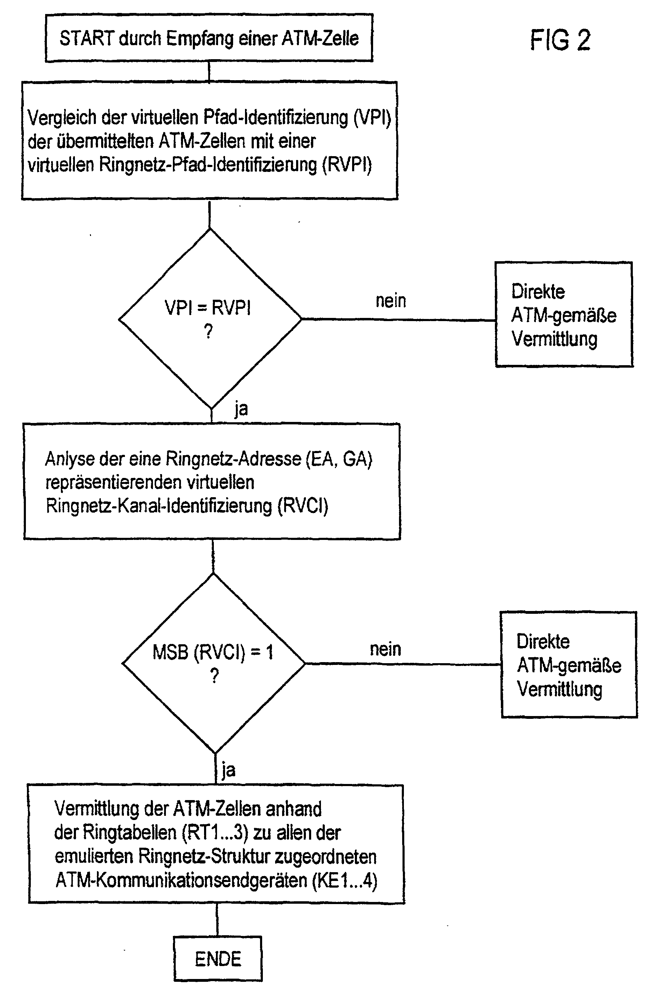

Die Vermittlung von an eine ATM-Vermittlungseinheit VE1...3 übermittelten ATM-Zellen erfolgt anhand des in FIG 2 dargestellten Vermittlungsablauf-Diagrammes:

Entspricht die in den Routinginformationen der eintreffenden ATM-Zellen angeordnete virtuelle Pfad-Identifizierung VPI keiner der in den Ringtabellen RT1...3 angegebenen, einer Ringnetz-Struktur bzw. einem Ringnetz-Pfad zugeordneten virtuellen Ringnetz-Pfad-Identifizierung RVPI, so werden die entsprechenden ATM-Zellen direkt anhand der Routinginformation und der eingerichteten Verbindungstabellen vermittelt. Entspricht die-virtuelle Pfad-Identifizierung VPI der eintreffenden ATM-Zellen einer einen virtuellen Ringnetz-Pfad repräsentierenden virtuellen Ringnetz-Pfad-Identifizierung RVPI so wird zusätzlich die eine Ringnetz-Adresse repräsentierende virtuelle Ringnetz-Kanal-Identifizierung RVCI für die Ringnetz-Vermittlung ausgewertet. Erfindungsgemäß repräsentiert die virtuelle Ringnetz-Kanal-Identifizierung RVCI von eine virtuelle Ringnetz-Pfad-Identifizierung RVPI aufweisenden ATM-Zellen entweder eine Ringnetz-Einzeladresse EA oder eine Ringnetz-Gruppenadresse GA. Bei gesetztem, höchstwertigstem Bit MSB repräsentiert die virtuelle Ringnetz-Kanal-Identifizierung RVCI eine Ringnetz-Gruppenadresse GA; ist das höchstwertigste Bit MSB nicht gesetzt, repräsentiert die virtuelle Ringnetz-Kanal-Identifizierung RVCI eine Ringnetz-Einzeladresse EA, wobei gemäß dem in Figur 2 dargestellten Vermittlungsablauf-Diagramm eine Ringnetz-Einzeladresse EA aufweisende ATM-Zellen direkt ATM-vermittlungsgemäß übermittelt werden. Durch die direkte Vermittlung von eine Ringnetz-Einzeladresse EA aufweisenden ATM-Zellen an das durch die virtuelle Ringnetz-Kanal-Identifizierung RVCI bestimmte Ziel werden lange Datentransport-Laufzeiten vermieden.

An eine Gruppenadresse GA zu vermittelnde ATM-Zellen - d.h. das höchstwertigste Bit MSB der virtuellen Kanal-Identifizierung RVCI ist gesetzt - werden nach FIG 2 gemäß der in den ATM-Vermittlungseinheiten VE1...3 angeordneten Ringtabellen RT1...3 sukzessiv zu allen dem virtuellen Ringnetz-Pfad zugeordneten ATM-Kommunikationsendgeräten KE1...4 vermittelt. In FIG 1 werden von der dritten ATM-Vermittlungseinheit VE3 ATM-Zellen - wovon eine ATM-Zelle stellvertretend für alle den Datenstrom bildende ATM-Zellen dargestellt ist - mit der virtuellen Pfad-Identifizierung VPI=1 und der virtuellen Kanal-Identifizierung VCI=8001h über die dritte ATM-Verbindungsleitung VL3 zu der ersten ATM-Vermittlungseinheit VE1 übermittelt. Anhand der in der ersten ATM-Vermittlungseinheit VE1 angeordneten Ringtabelle RT1 wird die Zugehörigkeit der die virtuellen Pfad-Identifizierung VPI=1 aufweisenden ATM-Zellen zu dem virtuellen Ringnetz-Pfad mit der virtuellen Ringnetz-Pfad-Identifizierung RVPI=1 festgestellt. Erfindungsgemäß repräsentiert die zugeordnete virtuelle Ringnetz-Kanal-Identifizierung RVCI=8001h eine Ringnetz-Adresse. Da das höchstwertigste Bit MSB der virtuellen Ringnetz-Kanal-Identifizierung RVCI gesetzt ist - MSB(RVCI=8001h)=1 - repräsentiert diese die Ringnetz-Gruppenadresse GA1, welche das zweite und vierte ATM-Kommunikationsendgerät KE2,4 identifiziert. Gemäß der ersten Ringtabelle RT1 werden die über den virtuellen Ringnetz-Pfad mit der virtuellen Ringnetz Pfad-Identifizierung VPI=RVPI=1 eintreffenden ATM-Zellen über den die virtuelle Ringnetz-Pfad-Identifizierung RVPI=2 aufweisenden virtuellen Ringnetz-Pfad an das erste ATM-Kommunikationsendgerät KE1 übermittelt. Dieses überprüft durch Auswertung der virtuellen Ringnetz-Kanal-Identifizierung RVCI die Relevanz der empfangen ATM-Zellen, d.h. die virtuelle Ringnetz-Kanal-Identifizierung RVCI der empfangenen ATM-Zellen wird mit der dem ersten ATM-Kommunikationsendgerät KE1 zugeordneten Ringnetz-Einzeladresse EA bzw., falls vorhanden, mit der Ringnetz-Gruppenadresse GA verglichen. Anschließend werden die ATM-Zellen über den virtuellen Ringnetz-Pfad mit der virtuellen Ringnetz-Pfad-Identifizierung RVPI=2'zurück an die erste ATM-Vermittlungseinheit gesendet. Von dort werden die ATM-Zellen gemäß der Ringtabelle RT1 über den virtuellen Ringnetz-Pfad mit der virtuellen Ringnetz-Pfad-Identifizierung VPI=3 an das zweite ATM-Kommunikationsendgerät KE2 übermittelt. Da die virtuelle Ringnetz-Kanal-Identifizierung RVCI der ATM-Zellen mit der dem zweiten ATM-Kommunikationsendgerät KE2 zugeordneten Ringnetz-Gruppenadresse GA1 identisch ist - RVCI=GA1 - werden die in den ATM-Zellen enthaltenen Nutzinformationen kopiert und im zweiten ATM-Kommunikationsendgerät KE2 gespeichert.

Anschließend werden die ATM-Zellen über den virtuellen Ringnetz-Pfad mit der virtuellen Ringnetz-Pfad-Identifizierung RCPI=3' an die erste ATM-Vermittlungseinheit VE1 gesendet. Gemäß der ersten Ringtabelle RT1 werden die ATM-Zellen über den die virtuelle Ringnetz-Pfad-Identifizierung RVPI=4 aufweisenden virtuellen Ringnetz-Pfad an die zweite ATM-Vermittlungseinheit VE2 übermittelt. Die Vermittlung der ATM-Zellen an die mit der zweiten und dritten ATM-Vermittlungseinheit verbundenen ATM-Kommunikationsendgeräte KE3,4 über die virtuellen Ringnetz-Pfade mit den virtuellen Ringnetz-Pfad-Identifizierungen RVPI5,5',6,7,7' sowie die Auswertung der entsprechenden virtuellen Ringnetz-Kanal-Identifizierung RVCI in den ATM-Kommunikationsendgeräten KE3,4 erfolgt in vorhergehend beschriebener Art und Weise. Treffen ATM-Zellen an demjenigen die ATM-Zellen ursprünglich aussendenden ATM-Kommunikationsendgerät KE1...4 ein, so werden die betroffenen ATM-Zellen durch das ATM-Kommunikationsendgerät KE1...4 entfernt.

Durch die Ausgestaltung der in den ATM-Vermittlungseinheiten VE1...3 angeordneten Ringtabellen RT1...3 werden die eine Ringnetz-Gruppenadresse GA als virtuelle Ringnetz-Kanal-Identifizierung RVCI aufweisenden und der erfindungsgemäßen emulierten Ringnetz-Struktur bzw. dem Ringnetz-Pfad zugeordneten ATM-Zellen seriell bzw. sukzessiv zu allen dem Ringnetz-Pfad zugeordneten ATM-Kommunikationsendgeräte KE1...4 vermittelt. Dadurch wird ein Zirkulieren der über die emulierte Ringnetz-Struktur transportierten Informationen bzw. ATM-Zellen gemäß dem im IEEE Standard 802.5 beschriebenen Token Ring Zugriffsprotokoll erreicht. Zusätzlich wird durch die erfindungsgemäße Ausgestaltung des Ringnetz-Tokens als eine vorgegebene Ringnetz-Gruppenadresse - beispielsweise durch den hexadezimalen Wert 8000h - ein Zirkulieren des Ringnetz-Tokens zu allen der emulierten Ringnetz-Struktur zugeordneten ATM-Kommunikationsendgeräte KE1...4 erreicht. Ein ATM-Kommunikationsendgerät KE1...4 kann genau dann auf die emulierte Ringnetz-Struktur bzw. deren Ressourcen zugreifen, wenn dieses die den Ringnetz-Token repräsentierende Token-Bitfolge empfängt. Dieses ATM-Kommunikationsendgerät KE1...4 kann dann über die emulierte Ringnetz-Struktur ein oder mehrere Datenpakete übermitteln.

Durch die Abbildung der eine Ringnetz-Einzeladresse EA bzw. Ringnetz-Gruppenadresse GA oder einen Ringnetz-Token repräsentierenden Ringnetz-Adresse auf die ATM-spezifische, virtuelle Kanal-Identifizierung VCI bzw. virtuelle Ringnetz-Kanal-Identifizierung RVCI im Kopffeld von zu übermittelnden ATM-Zellen, wird mit geringstem zusätzlichen Aufwand eine emulierte Ringnetz-Struktur innerhalb eines nach dem asynchronen Transfermodus ATM konzipierten Kommunikationsnetzes realisiert. Für das erfindungsgemäße Verfahren sind keine zusätzlichen Einrichtungen wie z.B. Lan-Server oder Gruppen-Server notwendig, wodurch der wirtschaftliche und der Netzwerk-Managment-Aufwand gering gehalten werden kann. Bereits für lokale Netzwerkanwendungen programmierte Anwenderprogramme bzw. Netzwerktreiber können ohne großen Aufwand auf die emulierte Ringnetz-Struktur bzw. auf die innerhalb der Ringnetz-Struktur realisierte ATM-Vermittlungstechnik übertragen werden. Dadurch kann der Verkehrsfluß bzw. die Netzwerk-Performance eines bereits existierenden lokalen Netzwerkes LAN durch die Umstellung des Übertragungsmediums auf die ATM-Vermittlungstechnik ohne großen Aufwand gesteigert werden.

## Patentansprüche

1. Verfahren zur Realisierung von emulierten Ringnetz-Strukturen in einem nach dem asynchronen Transfer-Modus (ATM) konzipierten Kommunikationsnetz mit mehreren, mit einer nach dem ATM konzipierten ATM-Vermittlungseinheit (VE1...3) verbundenen ATM-Kommunikationsendgeräten (KE1...4), wobei
- von den ATM-Kommunikationsendgeräten (KE1...4) an die ATM-Vermittlungseinheit (VE1...3) übermittelte, einen Zellkopf aufweisende ATM-Zellen mit Hilfe von im Zellkopf enthaltenen, jeweils aus einem virtuellen Pfad-Identifizierer VPI und aus einem virtuellen Kanal-Identifizierer VCI bestehenden Routinginformation an ein ATM-Ziel-Kommunikationsendgrät (KE1...4) vermittelt werden, und
- ATM-Kommunikationsendgeräte (KE1...4) einer Ringnetz-Struktur zuordenbar sind, wobei diesen ATM-Kommunikationsendgeräten (KE1...4) jeweils eine Ringnetz-Adresse (EA, GA) zugeordnet ist und der Ringnetz-Zugriff sowie die Ringnetz-Kommunikation ringnetz-spezifisch gesteuert wird,
**dadurch gekennzeichnet,**
- **daß** zwischen den zugeordneten ATM-Kommunikationsendgeräten (KE1...4) und der ATM-Vermittlungseinheit (VE1...3) in jede Übermittlungsrichtung jeweils ein virtueller Pfad als virtueller Ringnetz-Pfad eingerichtet ist,
- **daß** bei einer Ringnetz-Struktur-Kommunikation
-- dem den jeweiligen virtuellen Ringnetz-Pfad repräsentierenden virtuellen Ringnetz-Pfad-Identifizierer (RVPI1...7') ein eine Ringnetz-Adresse (EA, GA) repräsentierender, virtueller Ringnetz-Kanal-Identifizierer (RVCI) zugeordnet wird, und
-- über die virtuelle Ringnetz-Struktur übermittelte ATM-Zellen jeweils an die durch die Ringnetz-Adresse (GA, EA) adressierten ATM-Kommunikationsendgeräte (KE1...4) vermittelt werden.

2. Verfahren nach Anspruch 1,
**dadurch gekennzeichnet**
- **daß** bei einer über mehrere, zumindest teilweise vermaschte ATM-Vermittlungseinheiten (VE1...3) geführten Ringnetz-Struktur zwischen den betroffenen ATM-Vermittlungseinheiten (VE1...3) jeweils ein gemäß der Übermittlungsrichtung der Ringstruktur gerichteter virtueller Pfad als virtueller Ringnetz-Pfad eingerichtet wird, wobei virtuelle Ringnetz-Pfade durch virtuelle Ringnetz-Pfad-Identifizierer (RVPI1...7') repräsentiert sind, und
- **daß** bei einer Ringnetz-Struktur-Kommunikation zwischen den ATM-Vermittlungseinheiten (VE1...3) die ATM-Zellen mit Hilfe von virtuellen Ringnetz-Pfad-Identifizierern (RVPI1...7') an die jeweiligen eingerichteten Ringnetz-Pfade vermittelt und über diese übertragen werden.

3. Verfahren nach Anspruch 1 oder 2,
**dadurch gekennzeichnet,**
**daß** in jeweils eine Übermittlungsrichtung mehrere virtuelle Ringnetz-Pfade eingerichtet sind.

4. Verfahren nach einem der Ansprüche - bis 3,
**dadurch gekennzeichnet,**
**daß** die ATM-Kommunikationsendgeräte (KE1...4) mehreren Ringnetz-Strukturen zuordenbar sind.

5. Verfahren nach einem der vorherigen Ansprüche,
**dadurch gekennzeichnet,**
**daß** die Ringnetz-Adresse
- eine Ringnetz-Einzeladresse (EA1...4) oder
- eine Ringnetz-Gruppenadresse (GA1) repräsentiert.

6. Verfahren nach Anspruch 5,
**dadurch gekennzeichnet,**
**daß** eine erste vorgegebene Ringnetz-Gruppenadresse eine Rundsendeadresse und eine zweite vorgegebene Ringnetz-Gruppenadresse einen Ringnetz-Token repräsentiert, wobei der Ringnetz-Token den Zugriff auf die Ringnetz-Struktur steuert.

7. Verfahren nach Anspruch 5 oder 6,
**dadurch gekennzeichnet,**
- **daß** die Ringnetz-Adresse (EA, GA) hinsichtlich ihres Adressenumfangs und der Kennung der Ringnetz-Einzeladresse und Ringnetz-Gruppenadresse gemäß der IEEE Spezifikation 802.5 gebildet wird, und
- **daß** der spezifizierte Ringnetz-Token durch eine vorgebbare Ringnetz-Gruppenadresse (GA) repräsentiert ist.

8. Verfahren nach einem der Ansprüche 5 bis 7,
**dadurch gekennzeichnet,**
**daß** bei an eine ATM-Vermittlungseinheit (VE1...3) übermittelten, eine Ringnetz-Gruppenadresse (GA) aufweisenden ATM-Zellen diese mittels einer Ringtabelle (RT1...3) an die mit der ATM-Vermittlungseinheit (VE1...3) verbundenen und der Ringnetz-Struktur zugeordneten ATM-Kommunikationsendgeräte (KE1...4)vermittelt werden.

9. Verfahren nach einem der Ansprüche 5 bis 8,
**dadurch gekennzeichnet,**
**daß** bei einer aktuell angegebenen Ringnetz-Einzeladresse (EA) diese in eine ATM-Kommunikationsnetzadresse konvertiert und gemäß der konvertierten ATM-Kommunikationsnetzadresse direkt an das betroffene ATM-Kommunikationsendgerät (KE1...4) vermittelt wird.

## Claims

1. Method for implementing emulated ring network structures in a communication network designed in accordance with the asynchronous transfer mode (ATM), comprising a number of ATM communication terminals (KE1...4) connected to an ATM switching unit (VE1....3) designed in accordance with the ATM, in which
- ATM cells conveyed from the ATM communication terminals (KE1....4) to the ATM switching unit (VE1...3) and exhibiting a cell header are switched to a destination ATM communication terminal (KE1...4) with the aid of routing information contained in the cell header and in each case consisting of a virtual path identifier VPI and of a virtual channel identifier VCI, and
- ATM communication terminals (KE1...4) can be allocated to a ring network structure, these ATM communication terminals (KE1...4) in each case being allocated a ring network address (EA, GA) and the ring network access and the ring network communication being controlled in a ring network specific manner, **characterized in that**
- between the associated ATM communication terminals (KE1...4) and the ATM switching unit (VE1....3) in each case a virtual path is set up as virtual ring network path in each direction of transmission,
- that in the case of a ring network structure communication,
-- a ring network virtual channel identifier (RVCI) representing a ring network address (EA, GA) is associated with the ring network virtual path identifier (RVPI1...7') representing the respective virtual ring network path, and
-- ATM cells transmitted via the virtual ring network structure are in each case switched to the ATM communication terminals (KE1...4) addressed by the ring network address (GA, EA).

2. Method according to Claim 1, **characterized in that**
- in the case of a ring network structure conducted over a number of at least partially intermeshed ATM switching units (VE1...3), in each case a virtual path directed in accordance with the direction of transmission of the ring structure between the affected ATM switching units (VE1...3) is set up as virtual ring network path, virtual ring network paths being represented by ring network virtual paths identifiers (RVPI1...7'), and
- that in the case of a ring network structure communication between the ATM switching units (VE1...3), the ATM cells are switched to the respective ring network paths set up, and are transmitted via these, with the aid of ring network virtual path identifiers (RVPI1...7').

3. Method according to Claim 1 or 2, **characterized in that** a number of virtual ring network paths are set up in each case in one direction of transmission.

4. Method according to one of Claims 1 to 3, **characterized in that** the ATM communication terminals (KE1...4) can be allocated to a number of ring network structures.

5. Method according to one of the preceding claims, **characterized in that** the ring network address represents
- a single ring network address (EA1...4) or
- a ring network group address (GA1).

6. Method according to Claim 5, **characterized in that** a first predetermined ring network group address represents a broadcast address and a second predetermined ring network group address represents a ring network token, the ring network token controlling the access to the ring network structure.

7. Method according to Claim 5 or 6, **characterized in that**
- the ring network address (EA, GA) is formed in accordance with IEEE specification 802.5 with regard to the extent of its address and the identification of the single ring network address and ring network group address, and
- that the specified ring network token is represented by a predeterminable ring network group address (GA).

8. Method according to one of Claims 5 to 7, **characterized in that** in the case of ATM cells transmitted to an ATM switching unit (VE1...3) and having a ring network group address (GA), the cells are switched to the ATM communication terminals connected to the ATM switching unit (VE1...3) and associated with the ring network structure, by means of a ring table (RT1...3).

9. Method according to one of Claims 5 to 8, **characterized in that** in the case of a currently specified single ring network address (EA), this address is converted into an ATM communication network address and is switched directly to the affected ATM communication terminal (KE1...4) in accordance with the converted ATM communication network address.

## Revendications

1. Procédé pour réaliser des structures émulées de réseaux en anneau dans un réseau de communication conçu selon le mode de transfert asynchrone (ATM), avec plusieurs terminaux de communication ATM (KE1 à KE4) reliés à une unité de commutation ATM (VE1 à VE3) conçue selon le mode de transfert asynchrone ATM, dans lequel
- des cellules ATM transmises par les terminaux de communication ATM (KE1 à KE4) à l'unité de commutation ATM (VE1 à VE3) et comportant un en-tête de cellule sont commutées vers un terminal de communication ATM de destination (KE1 à KE4) à l'aide d'une information d'acheminement contenue dans l'en-tête de cellule et constituée à chaque fois d'un identificateur de chemin virtuel VPI et d'un identificateur de canal virtuel VCI, et
- des terminaux de communication ATM (KE1 à KE4) peuvent être associés à une structure d'anneau en réseau, une adresse d'anneau en réseau (EA, GA) étant associée à chaque fois à ces terminaux de communication ATM (KE1 à KE4) et l'accès au réseau en anneau ainsi que la communication de réseau en anneau étant commandés de manière spécifique au réseau en anneau,
**caractérisé par le fait que**
- un chemin virtuel est établi à chaque fois comme chemin virtuel de réseau en anneau entre les terminaux de communication ATM (KE1 à KE4) associés et l'unité de commutation ATM (VE1 à VE3) dans chaque sens de transmission,
- dans le cas d'une communication de structure de réseau en anneau,
-- on associe un identificateur de canal de réseau en anneau virtuel (RVCI) représentant une adresse de réseau en anneau (EA, GA) à l'identificateur de chemin de réseau en anneau virtuel (RVPI1 à RVPI7') représentant le chemin de réseau en anneau virtuel respectif, et
-- on commute des cellules ATM transmises par l'intermédiaire de la structure de réseau en anneau virtuelle à chaque fois vers les terminaux de communication ATM (KE1 à KE4) adressés par l'adresse de réseau en anneau (GA, EA).

2. Procédé selon la revendication 1,
**caractérisé par le fait que**
- dans le cas d'une structure de réseau en anneau, passant par l'intermédiaire de plusieurs unités de commutation ATM (VE1 à VE3) au moins partiellement maillées, entre les unités de commutation ATM (VE1 à VE3) concernées, on établit à chaque fois comme chemin de réseau en anneau virtuel un chemin virtuel dirigé selon le sens de transmission de la structure en anneau, des chemins de réseau en anneau virtuels étant représentés par des identificateurs de chemin de réseau en anneau virtuels (RVPI1 à RVPI7'), et
- dans le cas d'une communication de structure de réseau en anneau entre les unités de commutation ATM (VE1 à VE3), on commute les cellules ATM à l'aide d'identificateurs de chemin de réseau en anneau virtuels (RVPI1 à RVPI7') vers les chemins de réseau en anneau établis respectifs et on les transmet par l'intermédiaire de ceux-ci.

3. Procédé selon la revendication 1 ou 2,
**caractérisé par le fait que**
plusieurs chemins de réseau en anneau virtuels sont établis dans chaque sens de transmission.

4. Procédé selon l'une des revendications 1 à 3,
**caractérisé par le fait que**
les terminaux de communication ATM (KE1 à KE4) peuvent être associés à plusieurs structures de réseau en anneau.

5. Procédé selon l'une des revendications précédentes,
**caractérisé par le fait que**
l'adresse de réseau en anneau représente
- une adresse individuelle de réseau en anneau (EA1 à EA4) ou
- une adresse de groupe de réseau en anneau (GA1).

6. Procédé selon la revendication 5,
**caractérisé par le fait que**
une première adresse de groupe de réseau en anneau prédéterminée représente une adresse de diffusion générale et une deuxième adresse de groupe de réseau en anneau prédéterminée représente un jeton de réseau en anneau, le jeton de réseau en anneau commandant l'accès à la structure de réseau en anneau.

7. Procédé selon la revendication 5 ou 6,
**caractérisé par le fait que**
- on forme l'adresse de réseau en anneau (EA, GA), quant à sa grandeur d'adresse et à l'identification caractéristique de l'adresse individuelle de réseau en anneau et de l'adresse de groupe de réseau en anneau, selon la spécification IEEE 802.5, et
- le jeton de réseau en anneau spécifié est représenté par une adresse de groupe de réseau en anneau (GA) pouvant être prédéterminée.

8. Procédé selon l'une des revendications 5 à 7,
**caractérisé par le fait que,**
dans le cas de cellules ATM transmises à une unité de commutation ATM (VE1 à VE3) et comportant une adresse de groupe de réseau en anneau (GA), on commute celles-ci au moyen d'un tableau d'anneau (RT1 à RT3) vers les terminaux de communication ATM (KE1 à KE4) reliés à l'unité de commutation ATM (VE1 à VE3) et associés à la structure de réseau en anneau.

9. Procédé selon l'une des revendications 5 à 8,
**caractérisé par le fait que,**
dans le cas d'une adresse individuelle de réseau en anneau (EA) actuellement indiquée, on convertit celle-ci en une adresse de réseau de communication ATM et on commute directement, selon l'adresse de réseau de communication ATM convertie, vers le terminal de communication ATM (KE1 à KE4) concerné.
